# EUROPEAN PATENT SPECIFICATION

(11) **EP 2 202 048 B1**
(45) Date of publication and mention of the grant of the patent: **13.04.2011**
(21) Application number: 09170235.7
(22) Date of filing: 14.09.2009
(51) Int. Cl.: B29C 49/56, C03B 9/14, C03B 9/34, C03B 9/353, B29C 49/06

(54) **Blowmould with locking device and the method**
Blasform mit Verrieglungsvorrichtung und das Verfahren
Moule pour formage par soufflage avec système de verrouillage et le procédé

(30) Priority: 22.12.2008 EP 08425812
(43) Date of publication of application: 30.06.2010
(73) Proprietor: Gea Procomac S.p.A., 43038 Sala Baganza (PR) (IT)
(72) Inventor: Dordoni, Claudio, 43126 Parma (IT)
(74) Representative: Lissandrini, Marco

(56) References cited:
- EP-A- 1 980 386

## Description

The present invention relates to a mould and a method for moulding a container obtained from a parison. In particular, said mould finds application in the bottling sector, e.g. in (linear or rotary) machines for moulding containers by blowing parisons of heated plastic material.

As is well known, there are different types of moulds, classified according to the opening principle. "Linear" moulds are formed by two half-portions or half-moulds, relatively mobile with respect to one another by translation. "Alligator mouth" (or more briefly "alligator") moulds and "book moulds" comprise two half-moulds hinged to each other at one of the two ends. In addition to the half-moulds, generally there is also an element for shaping the bottom of the container (commonly known in the industry by the term "bottom plate"). The bottom plate is positioned at one of the two bases of the mould, in such a way that it can be engaged (or disengaged) by the half-moulds during the closing (or opening) movement.

Alligator moulds are constituted by a fixed half-mould and by a mobile half-mould, both vertical in the closed position. In particular, in rotating carousel machines, the fixed half-mould is positioned tangentially to the carousel. Alligator moulds are characterized in that the half-moulds are mutually hinged according to a substantially horizontal hinge axis. In this way, the mobile half-mould rotates around the hinge from a vertical position (corresponding to the closed mould) to a horizontal position (corresponding to the open mould). The motion of the mobile half-mould is commanded through one or more cams that engage corresponding rollers connected to levers for actuating the half-moulds.

The main drawback of the use of alligator moulds is linked to the fact that the mobile half-mould requires a very wide aperture angle which, in turn, determines high stresses on the lever system and on the sliding rollers on the command cams.

Another disadvantage of alligator moulds is linked to the fact that the fixed half-mould requires an offsetting travel to allow the disengagement of the bottom plate. Since said travel is actuated pneumatically, there is a high consumption of air and, hence, of energy.

Relative to alligator moulds, book moulds have a substantially vertical hinge axis and they have a smaller aperture angle, determining lesser stresses on the lever system and on the sliding rollers of the cams. During the blowing step, air at 40 bar pressure is blown into the parison, therefore the closed half-moulds are internally subjected to a thrust of several tons, depending on the dimensions and shape of the final container. The locking devices of the moulds in closed configuration must be able to withstand such stresses.

A first known solution consists of employing vertically mobile pins, inserted within borings obtained on the mould holders. In particular, said borings are obtained in the area of separation and opening of the half-moulds and they are distributed over the entire height of the half-moulds.

The main drawback of currently known solutions is linked to the fact that, to withstand the stresses during the blowing step and to prevent deformations, the locking devices are very heavy, so the moving of the half-moulds requires a considerable expenditure of energy. For this reason, in proximity to the edge of the moulds (i.e. of the borings) there are present pneumatic or hydraulic or mechanical systems for commanding the locking devices, which contribute to making the moulds very costly. An example of such a mould is shown in EP 1980386 A1. Moreover, to assure good operation, the coupling between pins and borings must provide for minimum backlash. However, this causes an aperture, albeit limited, at the plane of separation of the half-moulds, which aperture can generate superficial damage on the body of the containers produced, worsening their quality.

Moreover, since the stresses caused by blowing are prevalently concentrated at the hinges, considerable deformations are generated in the areas neighbouring the pins.

In this context, the technical task on which the present invention is based is to propose a mould and a method for moulding a container obtained from a parison, which overcomes the drawbacks of the aforementioned prior art. In particular, an object of the present invention is to propose a mould for moulding a container obtained from a parison, able to withstand the stresses acting on the closed half-moulds during the blowing of high pressure air.

Another object of the present invention is to make available a mould for moulding a container obtained from a parison, in which the locking of the half-moulds during the blowing step enables to prevent or reduce superficial damage to the body of the moulded container, suffered during the blowing operation.

An additional object of the present invention is to propose a mould that is constructively simple, light and economical.

Another object of the present invention is to make available a mould for moulding a container obtained from a parison, which is reliable and easy to maintain.

Yet another object of the present invention is to propose a mould and a method for moulding a container obtained from a parison, in which the energy required to move the half-moulds and lock them is reduced relative to prior art solutions.

The technical task and the objects specified above are substantially achieved by a mould and by a method for moulding a container obtained from a parison, comprising the technical characteristics set forth in one or more of the appended claims.

Additional characteristics and advantages of the present invention shall become more readily apparent from the indicative, and hence non limiting, description of a preferred but not exclusive embodiment of a mould and a method for moulding a container obtained from a parison, as illustrated in the accompanying drawings in which:
- Figure 1 shows a perspective view of a mould for moulding a container obtained from a parison, according to the present invention, in an open position;

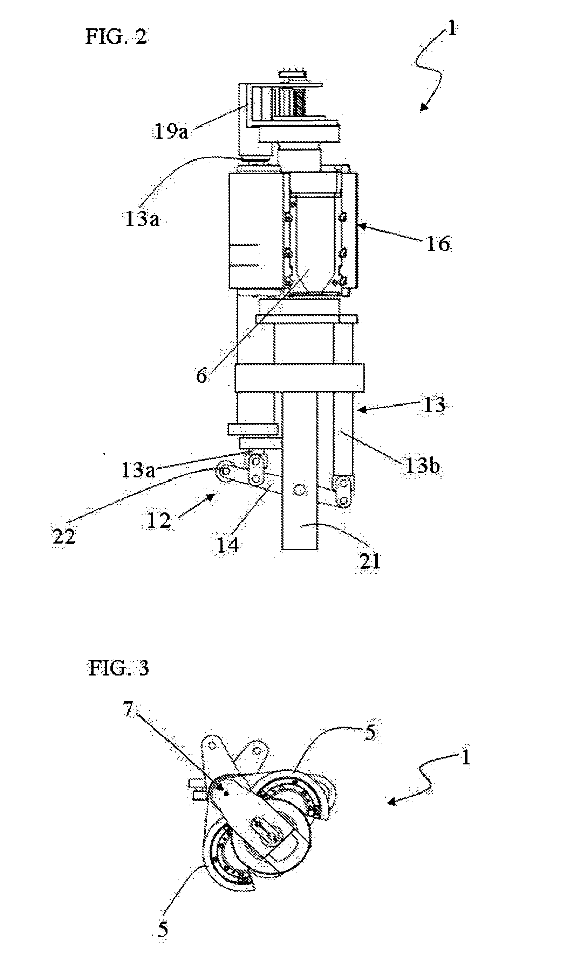

- Figure 2 shows a sectioned lateral view of the mould of figure 1, in the open position;
- Figure 3 shows a top view of the mould of figure 1, in the open position;

- Figures 4-11 show perspective views of the mould of figure 1, in as many configurations corresponding to different instants in the work process;
- Figures 12-19 show sectioned lateral views of the mould of figure 1 (some parts have been removed for the sake of clarity), in the same configurations as figures 4-11;
- Figures 20a-20c show a lateral sectioned view of a first embodiment of a portion of the mould (base and collar) of figure 1, in as many configurations corresponding to different instants in the work process;
- Figures 21a and 21b show respectively a perspective and lateral sectioned view of a second embodiment of a portion of the mould (semi-cylindrical portions and collar) of figure 1;
- Figure 22 shows a perspective view of a moulding machine of the type with rotating carousel bearing moulds according to figure 1.

With reference to the figures, number 1 indicates a mould for moulding at least one container 2 obtained from a parison 3. In particular, the parison 3, formed by a tubular central body and by a mouth (not subjected to work processes), is made of plastic material. Alternatively, the parison 3 is made of glass.

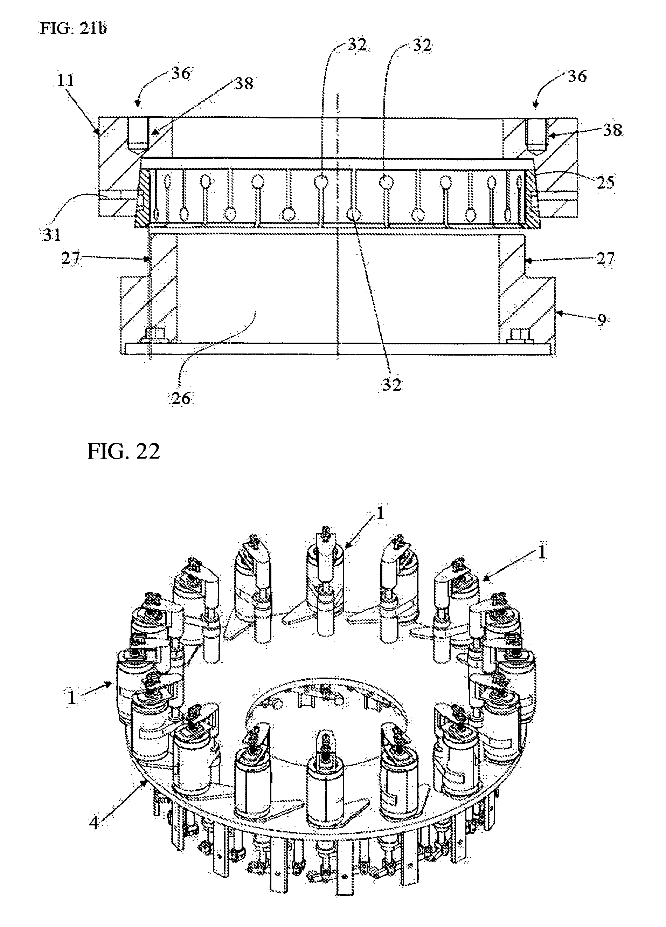

In the embodiment described and illustrated herein (see figure 22), the mould 1 is positioned on a moulding machine of the type with rotating carousel 4. In an alternative embodiment (not shown), the mould 1 is positioned on a linear moulding machine.

The mould 1 is formed by two half-portions 5 relatively mobile with respect to one another at least between a closed position and an open position of the mould 1. In particular, when the mould 1 is in the closed position, the two half-portions 5 are close to each other in such a way as to define at least one cavity 6 for housing the parison 3 or the moulded container 2 and two opposite bases 9a, 9b of the mould 1. In an embodiment (not shown), the two half-portions 5 placed close to each other define a plurality of housing cavities 6 for as many parisons 3 or moulded containers 2. Vice versa, when the mould 1 is in the open position, the two half-portions 5 are moved away from each other to enable the disengagement of the moulded container 2.

Preferably, the half-portions 5 are mutually hinged in such a way as to rotate around a shared articulation axis 7. In particular, in the embodiment described and illustrated herein, the mould 1 is of the "book" type. Indeed, the half-portions 5 are both mobile by rotation around the axis 7, which is substantially vertical, i.e. orthogonal to the rotating carousel 4.

In an alternative embodiment (not shown), the mould 1 is of the "alligator type". In this case, one of the half-portions 5 is fixed and the other one is mobile by rotation around the axis 7. In particular, in this embodiment, the axis 7 is horizontal, i.e. it lies in the plane defined by the rotating carousel 4.

In an additional embodiment (not shown), the mould 1 is of the "linear" type, i.e. the two half-portions 5 are moved towards and away from each other by a translating motion. In particular, the half-portions 5 can both be mobile or one can be fixed and one mobile.

The mould 1 comprises at least one locking collar 11 operatively active on a corresponding base 9 of the mould 1 to lock it in the closed position.

The collar 11 internally supports an elastically deformable sleeve 25 which, in an engaged configuration of the collar 11 with the corresponding base 9, is interposed between the collar 11 itself and the base 9, whereby the sleeve 25 is subjected to a thrust of the collar 11 against the base 9 and is elastically deformed in such a way as to take up mechanical backlash between the collar 11 and the corresponding base 9, and therefore between the half-portions 5. For example, the collar 11 is made of steel or stainless steel, while the sleeve 25 is made of spring steel or stainless steel.

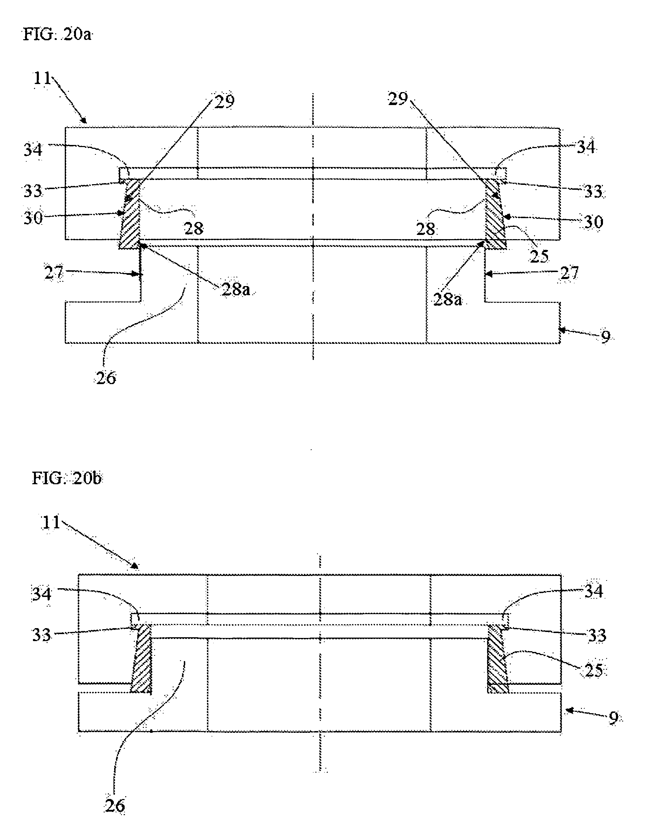

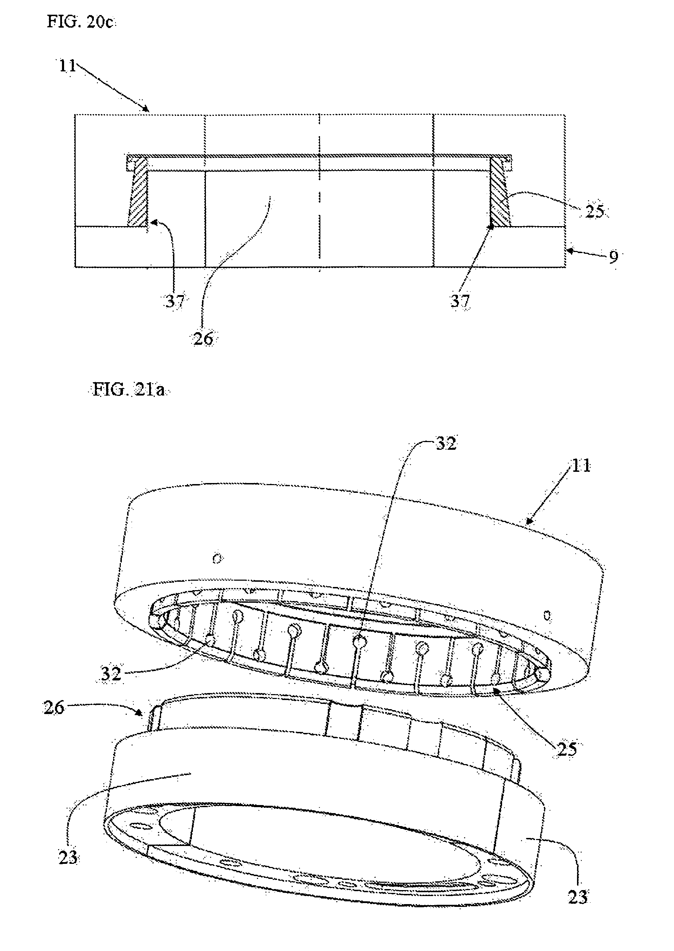

In a first embodiment, shown in figures 20a-20c, the base 9, with the mould 1 in the closed position, defines a male element 26 which, in the configuration of engagement of the collar 11 with said base 9, is inserted into the sleeve 25 defining a cylindrical or prismatic coupling between a lateral profile 27 of the male element 26 and an inner face 28 of the sleeve 25. In a second embodiment, shown in figures 21a and 21b, said base 9 carries two semi-cylindrical portions 23 which, with the mould 1 in the closed position, define said male element 26.

For example, the male element 26 has the shape of a cylinder (solid or hollow) with a circular or elliptical section, or has the shape of a prism (solid or hollow). Consequently, the lateral profile 27 of the male element 26 is constituted by the lateral surface of the cylinder or prism. Correspondingly, the sleeve 25 defines, on the side of its inner face 28, a cylindrical or prismatic cavity.

Preferably, an end portion 28a of the inner face 28 of the sleeve 25 is partially inclined with respect to the lateral profile 27 of the male element 26 in such a way as to favour the insertion of the male element 26 into the sleeve 25. In particular, with the collar 11 in the engaged configuration with the base 9, said end portion 28a forms a gap 37 with the lateral profile 27 of the male element 26.

The sleeve 25 has a trunco-conical or trunco-pyramidal outer face 29 shaped complementarily to a corresponding trunco-conical or trunco-pyramidal inner face 30 of the collar 11.

Preferably, there are present two locking collars 11a, 11b operatively active on corresponding opposite bases 9a, 9b of the mould 1 to lock it in the closed position. Each collar 11a, 11b has radial pins 31 (see figure 21b) insertable into slots 32 formed in the sleeve 25 in such a way as to bind the sleeve 25 integrally to the relative collar 11a, 11b.

Alternately, to bind the sleeve 25 integrally to the collar 11, the sleeve 25 has a projection 33 insertable into a recess 34 formed in the collar 11. For example, said projection 33 consists of a lateral shoulder of the sleeve 25, as shown in figures 20a-20c.

Preferably, returning means 36 are provided, operatively active on the sleeve 25 in such a way that, in a disengaged configuration of the collar 11 with respect to the corresponding base 9, said returning means 36 bring the sleeve 25 back to an initial condition of absence of deformation. For example, said returning means 36 comprise at least one hole 38 for the passage of a grubscrew (or of another locator) with a spring attached in such a way that said grubscrew can be brought into proximity with the sleeve 25 to stimulate the return to the initial condition.

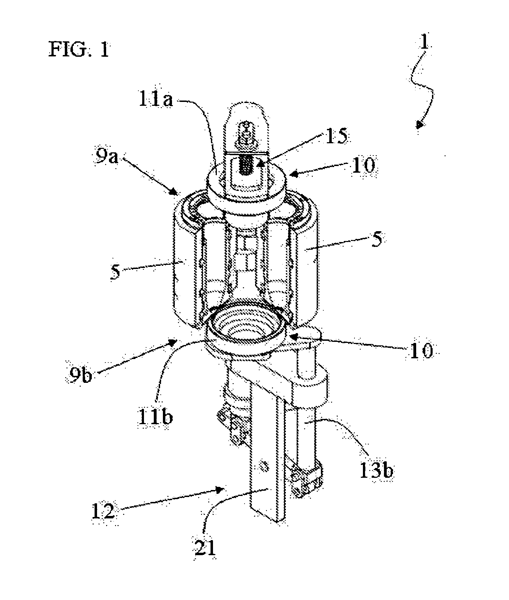

Advantageously, in the embodiment described and illustrated herein, the locking collars 11a, 11b are moved into or out of proximity with respect to the corresponding bases 9a, 9b by a single actuating member 12, visible e.g. in figure 1. Preferably, the actuating member 12 is constituted by a first rod 13a able to move one of the locking collars 11a and by a second rod 13b able to move the other locking collar 11b. Said rods 13 are hinged to a connecting rod 14 having its fulcrum on a support 21 connected to the mould 1. In particular, the rods 13 are hinged to the connecting rod 14 at opposite parts relative to the support 21. Preferably, the rods 13 are provided with one or more elastic members (e.g. springs or pneumatic cylinders) able to compensate for any machining and mounting tolerances existing between the bases 9a, 9b and therefore to facilitate the coupling between the collars 11a, 11b and the respective bases 9a, 9b. One of the ends of the connecting rod 14 bears a sliding roller 22 able to come in contact with a fixed cam (not shown) integral to the foundation of the rotating carousel 4. In particular, said cam has a variable profile according to the angular position assumed by the mould 1 as a result of the rotation of the rotating carousel 4.

Alternatively, the mould 1 is provided with two distinct actuating members (not shown) each able to move one of the locking collars 11a, 11b into or out of proximity with respect to the corresponding bases 9a, 9b. In particular, a first actuating member is able to move one of the locking collars 11a and a second actuating member is able to move the other locking collar 11b. In this case, both actuating members are constituted by distinct actuating rods, each of which is hinged to a respective connecting rod provided with a sliding roller able to come in contact with corresponding fixed cams, integral with the foundation of the rotating carousel 4. Said cams have variable profiles during the rotation of the rotating carousel 4, therefore the collars 11a, 11b can follow different motion laws.

Preferably, the mould 1 is provided with a bottom plate 8 co-operating with the half-portions 5 to shape the bottom of the container 2. In particular, the bottom plate 8 is positioned at one of the two bases 9a, 9b of the mould 1, for simplicity defined as first base 9a of the mould 1. In the embodiment described and illustrated herein, the first base 9a is positioned at a greater distance from the rotating carousel 4 than the other base 9b (for simplicity defined as second base 9b), i.e. the parison 3 and the moulded container 2 are overturned (the mouth of the container 2 is oriented downwards). Alternatively, the first base 9a may be positioned at a smaller distance from the rotating carousel 4 than the second base 9b, i.e. the parison 3 and the moulded container 2 are upright (the mouth of the container 2 is oriented upwards).

The bottom plate 8 is coupled to the locking collar 11 through an elastic member 15. For consistency with the nomenclature of the bases, we will hereinafter designate as "first locking collar 11a" the collar to which the bottom plate is coupled. For example, said elastic member 15 is constituted by a spring that allows relative motion between the bottom plate 8 and the first locking collar 11a in such a way that the bottom plate 8 can move from an engagement configuration to a disengagement configuration relative to the half-portions 5.

Preferably, the locking collars 11a, 11b are integral with respective collar holders 19. In this case, the spring couples the bottom plate 8 to a first collar holder 19a, which is integral with the first locking collar 11a. The relative motion between the bottom plate 8 and the first collar holder 19a (and the first collar 11a) is necessary to allow the disengagement (and the engagement) of the bottom plate 8 in relation to the half-portions 5 at different times with respect to the completion of the locking (and of the unlocking) of the first base 9a by the first collar 11a. Use of the spring enables to prevent, during said relative motion, the bottom plate 8 from accidentally stopping in incorrect intermediate positions for reasons linked to wear or jams. If the parison 3 is overturned, the elastic force of the spring is added to the force of gravity acting on the bottom plate 8, allowing always to bring the bottom plate 8 back underneath the first collar 11a. If the parison 3 is upright, the function of the spring is to contrast the force of gravity which would tend to attract the bottom plate 8 downwards, whilst the elastic force acts in the opposite direction, bringing the bottom plate 8 back above the first collar 11a. Alternatively, the movement of the bottom plate 8 from the engaged configuration to the disengaged configuration relative to the half-portions 5 takes place by means of an actuator member (not shown) able to move the bottom plate 8 separately (i.e. independently) from the first locking collar 11a. In this case, the actuator member is independent of the sole actuating member 12 (or of the two distinct actuating members) of the locking collars 11a, 11b. For example, the actuator member is constituted by a control rod of a corresponding fixed cam, integral with the foundation of the rotating carousel 4.

The method for moulding a container from a parison, according to the present invention, is described hereafter.

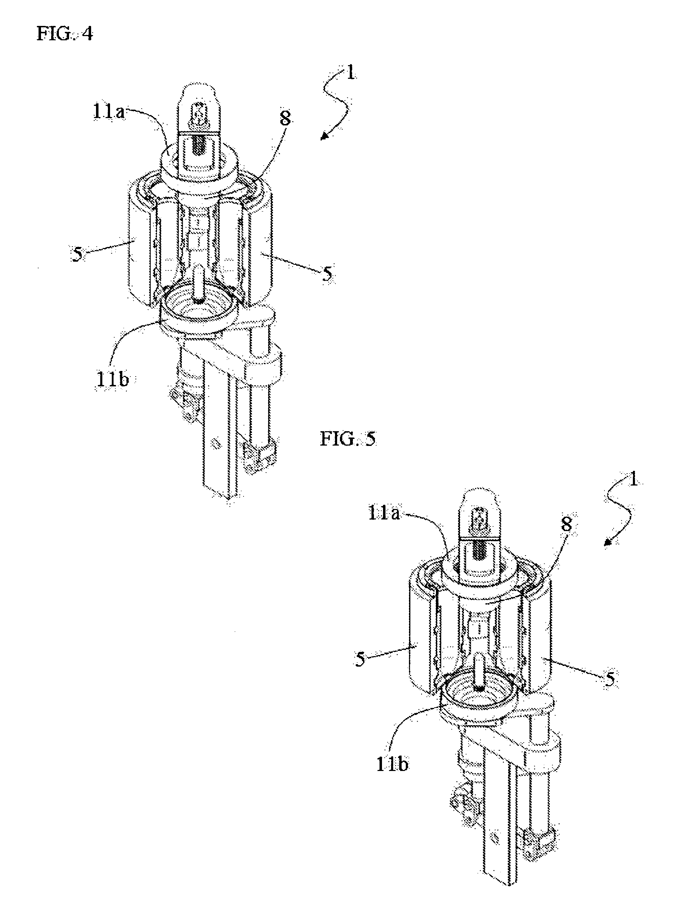

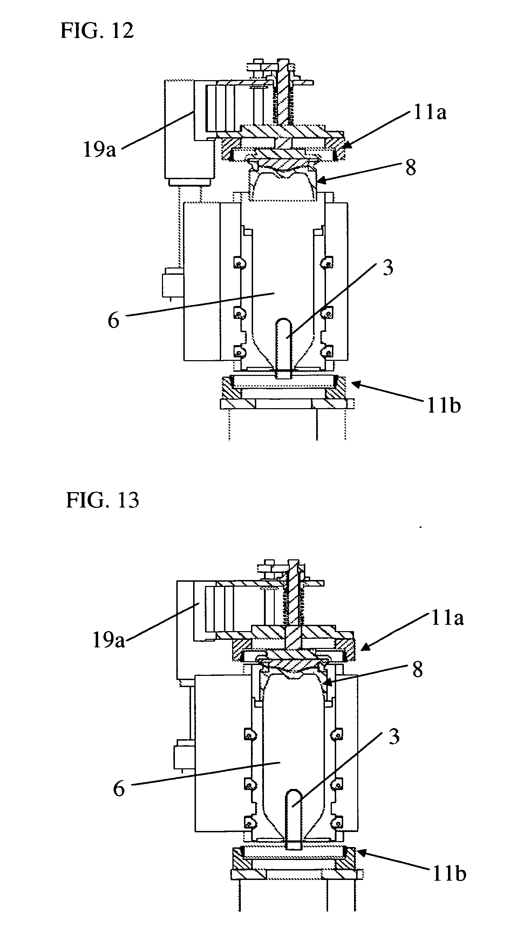

As shown in figures 4 and 12, the parison 3 is inserted between the two half-portions 5 of the open mould 1. During this step, the half-portions 5 do not adhere to the parison 3, which therefore is supported and maintained within the half-portions 5 by means of a dedicated member (not shown).

The two half-portions 5 are moved progressively closer to each other in such a way as to close the mould 1, as shown in figures 5 and 13. In the case of the book mould 1 shown in the figures, the half-portions 5 are mutually approached by rotation around the shared articulation axis 7. Simultaneously, the locking collars 11a, 11b are activated. In particular, during the rotation of the carousel 4, the roller 22 engages the fixed cam, determining the rotation of the connecting rod 14. In this way, the rods 13 move the respective locking collars 11a, 11b (and collar holders 19) making them move progressively closer to the corresponding bases 9a, 9b of the mould 1. During this step, corresponding to the disengaged configuration of the collars 11a, 11b from the corresponding bases 9a, 9b, the sleeve 25 is in the initial condition of absence of deformation. The bottom plate 8 also, being coupled to the first collar holder 19a by means of the elastic member 15, approaches the first base 9a until reaching the engaged configuration with the half-portions 5.

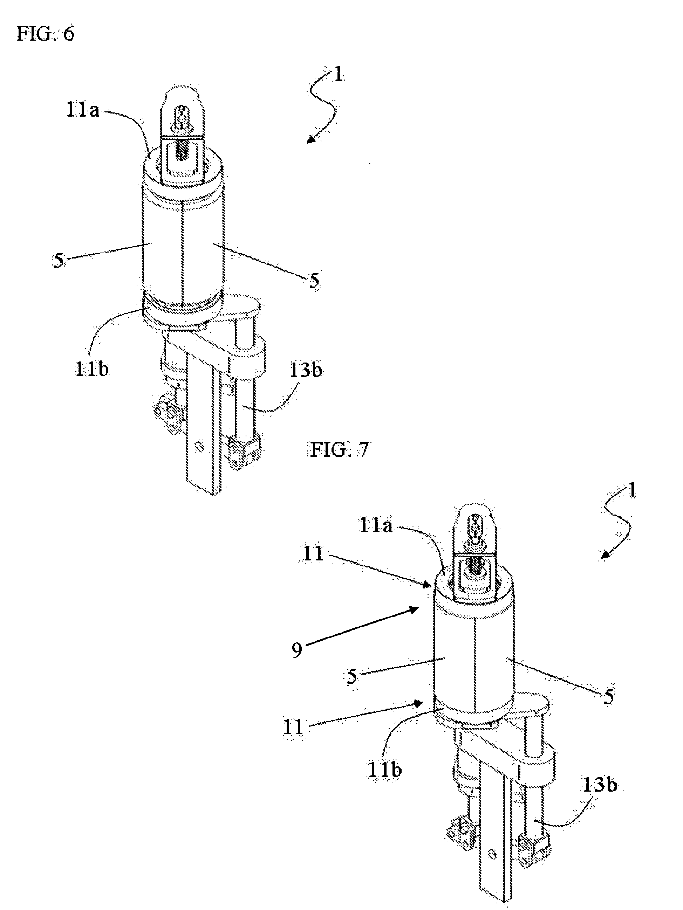

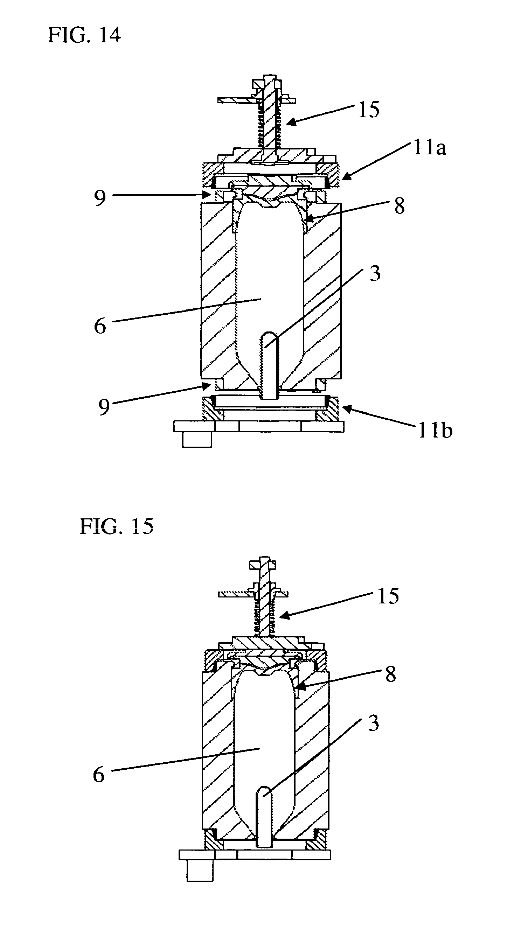

The mutual approach of the half-portions 5 continues until their mutual contact and the bottom plate 8 remains in the engaged configuration with the half-portions 5 (see figures 6 and 14). At the end of the closing of the mould 1, the parison 3 is housed inside the cavity 6 defined by the half-portions 5.

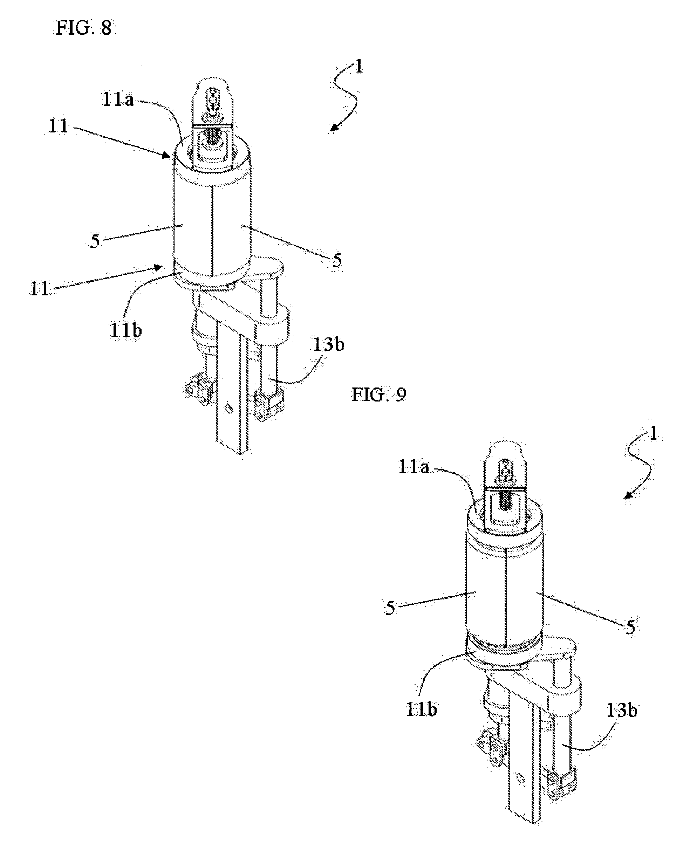

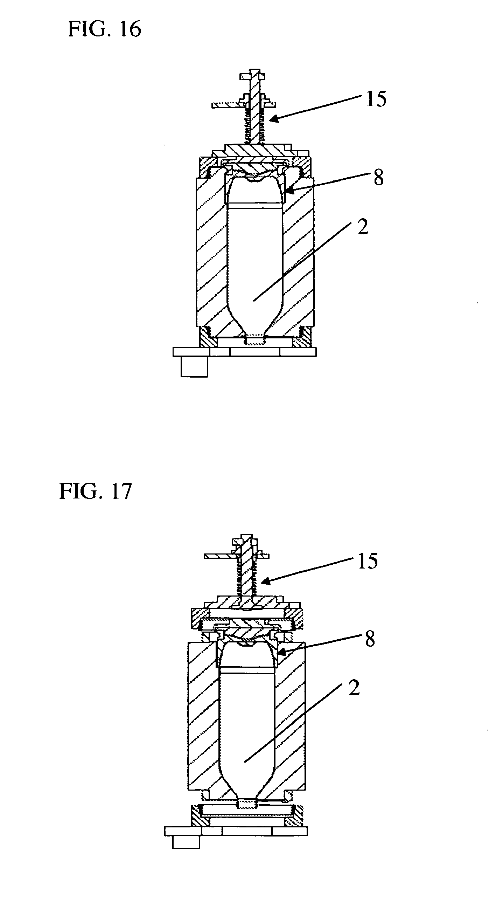

As shown in figures 7 and 15, the rods 13 continue their travel until the locking collars 11a, 11b complete their own travel approaching the respective bases 9a, 9b and engage with the latter. In particular, between the internal diameter of the sleeve 25 and the diameter of the male element 26, a tolerance is provided which allows the insertion of the male element 26 into this same sleeve 25. For example, the tolerance in the diameters can vary between 0.5 mm and 2 mm. The insertion of the male element 26 into the sleeve 25 is facilitated by the (inclined) end portion 28a of the inner face 28 of the sleeve 25. Once the insertion of the male element 26 into the sleeve 25 is completed, the forces exercised on the collar 11 are unloaded from the inner face 30 of the collar onto the outer face 29 of the sleeve 25 (through the trunco-conical or trunco-pyramidal coupling) so that the sleeve 25 undergoes an elastic compression which leads it to adhere to the male element 26, taking up the initial tolerance. The parison 3 is then processed (e.g. by blowing) to obtain the container 2. Said processing step corresponds to the configuration of the mould 1 shown in figures 8 and 16. At the end of the blowing step, during the rotation of the carousel 4, the roller 22 returns to engage the fixed cam, determining the rotation of the connecting rod 14 in the opposite direction to the step of closing of the mould 1. In this way, the rods 13 move the respective locking collars 11a, 11b (and collar holders 19) making them move progressively farther away from the corresponding bases 9a, 9b of the mould 1, as shown in figures 9 and 17. Ceasing the thrust on the outer face 29, the sleeve 25 returns to the initial condition of absence of deformation. In particular, to favour the return of the sleeve 25 to the initial position, it can be stressed by means of a passing grubscrew in the specially-made hole 38. In this way, the tolerance between the internal diameter of the sleeve 25 and the diameter of the male element 26 is re-established, which allows the extraction of the male element 26 from the sleeve 25. In the event of the male element 26 having the shape of a hollow cylinder, "diameter" is intended to mean the external diameter of this cylinder.

The bottom plate 8, being coupled to the first collar holder 19a by means of the elastic member 15, remains motionless.

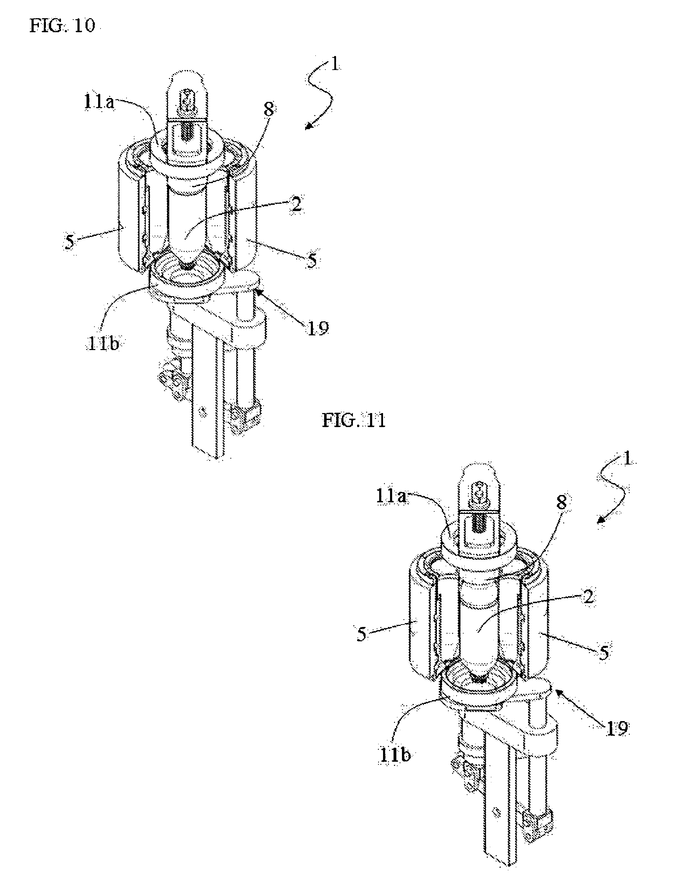

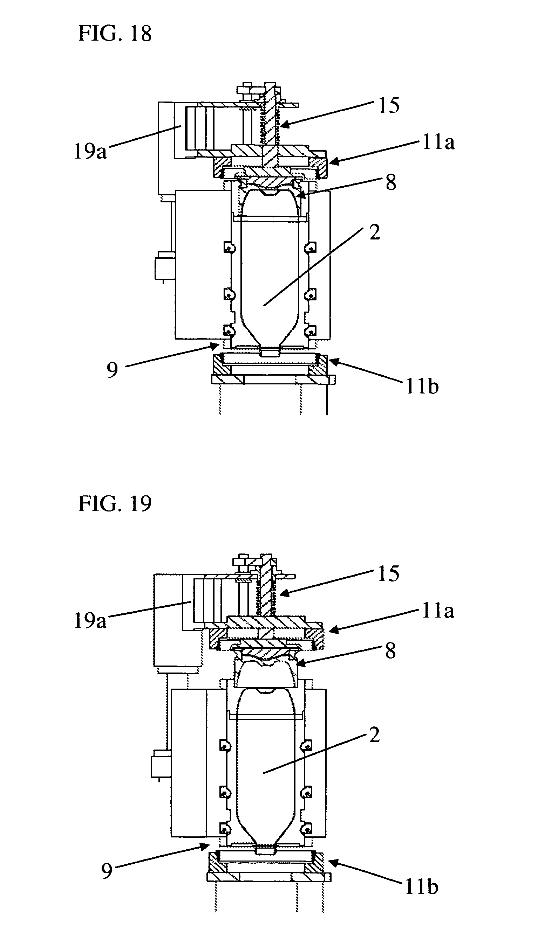

Subsequently, the collars 11a, 11b continue to move away and the two half-portions 5 are progressively moved away by rotation around the axis 7 in such a way as to open the mould 1 and allow the disengagement of the bottom plate 8, as shown in figures 10 and 18. The collars 11a, 11b return to the disengaged configuration with respect to the corresponding bases 9a, 9b.

The half-portions 5 move away until the complete opening of the mould 1 and until the bottom plate 8 completes its travel away, in such a way as to release the moulded container 2 (see figures 11 and 19). Subsequently, the moulded container 2 is engaged and extracted from the mould 1 by means of the dedicated member.

It should be noted that, if a single actuating member 12 is used, the first collar 11a (bearing the bottom plate 8) has to complete a longer travel than the other collar 11b, so the disengagement times of the two collars 11a, 11b are different. This holds true if the two collars 11a, 11b are identical. If collars 11a, 11b with different heights are appropriately chosen, their travels are made uniform and the disengagement times are also equal.

From the above description, the characteristics of the mould for moulding at least one container obtained from a parison and the method thereof, according to the present invention, are clear, as are its advantages.

In particular, thanks to the use of at least one collar to lock the half-portions of the closed mould, the stresses due to blowing are distributed in the mould and not concentrated at the locking areas. Indeed, stresses are distributed along the outer perimeter of the mould and they are no longer concentrated at hinges or pivot pins as was the case in prior art solutions. Since the collars are seated directly on the bases of the mould, enveloping them, the distribution of stresses is optimised and the resisting sections can be reduced to the minimum. The stresses are in fact distributed along the entire perimeter of the locking collars.

Furthermore, thanks to the use of the collars and their capacity for completely enveloping the bases of the mould, it is possible to enormously reduce the dimensions of the mould holders, reducing their function to the sole necessity of sustaining the moulds in the movements of approaching and removal of the half-portions, therefore avoiding using them to contain the stresses generated by the high blowing pressure in collaboration with the supporting hinges and the locking members.

Furthermore, thanks to the use of elastically deformable sleeves and trunco-conical or trunco-pyramidal couplings between sleeves and collars, it is possible to take up the original tolerances and mechanical backlashes between the half-portions, eliminating the use of high-pressure pneumatic compensation systems. Said compensation systems were necessary, in prior art solutions, to compensate for displacements connected with the existing backlashes in the couplings between mould and locking members. With the proposed solution, on the other hand, the opening of the mould at the plane of separation of the half-moulds is prevented, even in the absence of a high-pressure pneumatic compensation system.

Furthermore, again thanks to the use of elastically deformable sleeves, the mechanical wear on the collars and the relative mechanisms is reduced by comparison with the state of the art, ensuring high reliability and ease of maintenance of the mould.

Moreover, the mechanisms for moving and locking the half-moulds are simple and slim. In particular, to lock (or unlock) the closed mould it is sufficient to move the collars closer to (or away from) the respective bases of the mould. Therefore, pneumatic or hydraulic or mechanical devices for actuating the locking systems are eliminated.

Moreover, use of the spring enables to move the bottom plate relative to the first collar, preventing the bottom plate from stopping in undesired configurations. Moreover, use of the collars, together with the spring, favours the manufacture of a constructively simple, light and economical mould.

## Claims

1. A mould (1) for moulding at least one container (2) obtained from a parison (3), comprising:
two half-portions (5) relatively mobile with respect to one another at least between a closed position of the mould (1), in which said half-portions (5) are moved close to each other to define at least one cavity (6) for housing the parison (3) or the moulded container (2), and an open position of the mould (1), in which said half-portions (5) are moved away from each other to enable the disengagement of the moulded container (2);
at least one locking collar (11) operatively active on a corresponding base (9) of the mould (1) to lock it in the closed position,
**characterised in that** said at least one collar (11) internally supports an elastically deformable sleeve (25) which, in an engaged configuration of the collar (11) with the corresponding base (9), is interposed between said collar (11) and said base (9), whereby said sleeve (25) is subjected to a thrust of the collar (11) against the base (9) and is elastically deformed in such a way as to take up mechanical backlash between the collar (11) and the corresponding base (9), and
therefore between said half-portions (5).

2. Mould. (1) as claimed in claim 1, wherein said base (9), with the mould (1) in the closed position, defines a male element (26) which, in said engaged configuration of the collar (11) with the base (9), is inserted into the sleeve (25) defining a cylindrical or prismatic coupling between a lateral profile (27) of the male element (26) and an inner face (28) of said sleeve (25).

3. Mould (1) as claimed in claim 1, further comprising at said base (9), two semi-cylindrical portions (23) which, with the mould (1) in the closed position, define a male element (26) which, in said engaged configuration of the collar (11) with the base (9), is inserted into the sleeve (25) defining a cylindrical or prismatic coupling between a lateral profile (27) of the male element (26) and an inner face (28) of said sleeve (25).

4. Mould (1) as claimed in claim 2 or 3, wherein an end portion (28a) of said inner face (28) of the sleeve (25) is partially inclined with respect to said lateral profile (27) of the male element (26) in such a way as to favour the insertion of the male element (26) into the sleeve (25).

5. Mould (1) as claimed in any of the previous claims, wherein said sleeve (25) has a trunco-conical or trunco-pyramidal outer face (29) shaped complementarily to a corresponding trunco-conical or trunco-pyramidal inner face (30) of the relative collar (11).

6. Mould (1) as claimed in any of the previous claims, comprising two locking collars (11a, 11b) operatively active on corresponding opposite bases (9a, 9b) of the mould (1) to lock it in the closed position.

7. Mould (1) as claimed in claim 6, comprising a single actuating member (12) for moving said locking collars (11a, 11b) into or out of proximity with respect to the corresponding bases (9a, 9b).

8. Mould (1) as claimed in claim 6, comprising two distinct actuating members, each able to move one of said locking collars (11a, 11b) into or out of proximity with respect to the corresponding base (9a, 9b).

9. Mould (1) as claimed in one of the claims 1 to 8, comprising a bottom plate (8) positioned at said base (9) of the mould (1), said bottom plate (8) co-operating with the half-portions (5) to shape the bottom of the container (2).

10. Mould (1) as claimed in claim 9, comprising an elastic member (15) to couple the bottom plate (8) to said at least one locking collar (11).

11. Mould (1) as claimed in claim 9, comprising an actuator member for moving the bottom plate (8) independently of the movement of said at least one locking collar (11), said bottom plate (8) moving from an engaged configuration to a disengaged configuration with respect to said half-portions (5).

12. Mould (1) as claimed in any of the previous claims, wherein said at least one collar (11) has radial pins (31) insertable into slots (32) formed in said sleeve (25) in such a way as to bind the sleeve (25) integrally to said collar (11).

13. Mould (1) as claimed in claims 1 to 12, wherein said sleeve (25) has a projection (33) insertable into a recess (34) formed in the collar (11) in such a way as to bind the sleeve (25) integrally to said collar (11).

14. Mould (1) as claimed in any of the previous claims, further comprising returning means (36) operatively active on the sleeve (25) in such a way that, in a disengaged configuration of the collar (11) with respect to the corresponding base (9), said returning means (36) bring the sleeve (25) back into an initial condition of absence of deformation.

15. Method for moulding a container (2) from a parison (3), comprising the following steps:
inserting the parison (3) between two half-portions (5) of an open mould (1);
maintaining the parison (3) between said half-portions (5) of the mould (1);
closing the mould (1) by moving said half-portions (5) close to each other;
locking the mould (1) closed by means of at least one locking collar (11) operatively active on a corresponding base (9) of the mould (1);
processing the parison (3) to obtain the container (2);
removing the locking collar (11) from the corresponding base (9) of the mould (1);
opening the mould (1) by moving said half-portions (5) away from each other;
extracting the moulded container (2) from the mould (1),
**characterised in that** the step of locking the mould (1) closed occurs by bringing said at least one collar (11) close to the corresponding base (9) in such a way that an elastically deformable sleeve (25), supported internally by the collar (11), is interposed between the collar (11) and the base (9), whereby said sleeve (25) is subjected to a thrust of the collar (11) against the base (9) and is elastically deformed, taking up mechanical backlash between said half-portions (5).

## Patentansprüche

1. Eine Form (1) zum Formen von mindestens einem Behälter (2) aus einer Vorform (3), umfassend:
zwei Halbteile (5), die relativ zueinander beweglich sind, und zwar mindestens zwischen einer geschlossenen Stellung der Form (1), in der die genannten Halbteile (5) einander angenähert werden, um mindestens einen Hohlraum (6) zur Aufnahme der Vorform (3) oder des geformten Behälters (2) zu bilden, und einer offenen Stellung der Form (1), in der die genannten Halbteile (5) voneinander entfernt werden, um das Herausnehmen des geformten Behälters (2) zu ermöglichen;
mindestens eine Verriegelungsschelle (11), die operativ an einer entsprechenden Basis (9) der Form (1) aktiv ist, um sie in der geschlossenen Stellung zu verriegeln,
**dadurch gekennzeichnet, dass** die mindestens eine Schelle (11) intern eine elastisch verformbare Hülse (25) trägt, die in einer verbundenen Konfiguration der Schelle (11) mit der entsprechenden Basis (9) zwischen der genannten Schelle (11) und der genannten Basis (9) eingesetzt ist, wobei die genannte Hülse (25) einem Druck der Schelle (11) gegen die Basis (9) ausgesetzt ist und elastisch so verformt wird, dass sie den mechanischen Rückstoß zwischen der Schelle (11) und der entsprechenden Basis (9) und somit zwischen den genannten Halbteilen (5) aufnimmt.

2. Form (1) nach Anspruch 1, wobei die genannte Basis (9) mit der Form (1) in der geschlossenen Stellung ein Einsetzelement (26) definiert, das in der genannten verbundenen Konfiguration der Schelle (11) mit der Basis (9) in die Hülse (25) eingesetzt wird und eine zylindrische oder prismatische Kupplung zwischen einem seitlichen Profil (27) des Einsetzelements (26) und einer inneren Seite (28) der genannten Hülse (25) definiert.

3. Form (1) nach Anspruch 1, die an der genannten Basis (9) zudem zwei halbzylindrische Abschnitte (23) umfasst, die bei geschlossener Stellung der Form (1) ein Einsetzelement (26) definieren, das in der genannten verbundenen Konfiguration der Schelle (11) mit der Basis (9) in die Hülse (25) eingesetzt wird und eine zylindrische oder prismatische Kupplung zwischen einem seitlichen Profil (27) des Einsetzelements (26) und einer inneren Seite (28) der genannten Hülse (25) definiert.

4. Form (1) nach Anspruch 2 oder 3, wobei ein Endabschnitt (28a) der genannten inneren Seite (28) der Hülse (25) teilweise zum genannten Seitenprofil (27) des Einsetzelements (26) so geneigt ist, dass der Einsatz des Einsetzelements (26) in die Hülse (25) begünstigt wird.

5. Form (1) nach einem der vorangehenden Ansprüche, wobei die genannte Hülse (25) eine stumpfkegelförmige oder stumpfpyramidenförmige Außenseite (29) besitzt, die ergänzend zu einer entsprechenden stumpfkegelförmigen oder stumpfpyramidenförmigen inneren Seite (30) der jeweiligen Schelle (11) geformt ist.

6. Form (1) nach einem der vorangehenden Ansprüche, umfassend zwei Verriegelungsschellen (11a, 11b), die operativ an entsprechenden entgegengesetzten Basen (9a, 9b) der Form (1) aktiv sind, um sie in der geschlossenen Stellung zu verriegeln.

7. Form (1) nach Anspruch 6, umfassend ein einzelnes Betätigungsglied (12) zur Bewegung der genannten Verriegelungsschellen (11a, 11b) in Annäherung an die oder Entfernung von den entsprechenden Basen (9a, 9b).

8. Form (1) nach Anspruch 6, umfassend zwei unterschiedliche Betätigungsglieder, die jeweils in der Lage sind, eine der genannten Verriegelungsschellen (11a, 11b) in Annäherung an die oder Entfernung von den entsprechenden Basen (9a, 9b) zu bewegen.

9. Form (1) nach einem der Ansprüche 1 bis 8, umfassend eine Bodenplatte (8), die an der genannten Basis (9) der Form (1) angebracht ist, wobei die genannte Bodenplatte (8) mit den Halbteilen (5) zusammenwirkt, um den Boden des Behälters (2) zu bilden.

10. Form (1) nach Anspruch 9, umfassend ein elastisches Glied (15), um die Bodenplatte (8) mit der genannten mindestens einen Verriegelungsschelle (11) zu kuppeln.

11. Form (1) nach Anspruch 9, umfassend ein Betätigungsglied, um die Bodenplatte (8) unabhängig von der Bewegung der genannten mindestens einen Verriegelungsschelle (11) zu bewegen, wobei sich die genannte Bodenplatte (8) von einer verbundenen Konfiguration in eine abgelösten Konfiguration in Bezug auf die genannten Halbteile (5) bewegt.

12. Form (1) nach einem der vorangehenden Ansprüche, wobei die genannte mindestens eine Schelle (11) radiale Stifte (31) aufweist, die in Schlitze (32) eingesetzt werden können, die in der genannten Hülse (25) so ausgebildet sind, sodass die Hülse (25) vollständig mit der genannten Schelle (11) verbunden wird.

13. Form (1) nach den Ansprüchen 1 bis 12, wobei die genannte Hülse (25) einen Vorsprung (33) aufweist, der in eine Aussparung (34) in der Schelle (11) eingesetzt werden kann, sodass die Hülse (25) vollständig mit der genannten Schelle (11) verbunden wird.

14. Form (1) nach einem der vorangehenden Ansprüche, die zudem Rückholmittel (36) umfasst, die operativ auf der Hülse (25) aktiv sind, sodass die genannten Rückholmittel (36) die Hülse (25) in einer abgelösten Konfiguration der Schelle (11) zur entsprechenden Basis (9) in einen anfänglichen Zustand ohne Verformung zurückbringen.

15. Verfahren zum Formen eines Behälters (2) aus einer Vorform (3), umfassend folgende Schritte:
Einsetzen der Vorform (3) zwischen zwei Halbteile (5) einer offenen Form (1);
Beibehalten der Vorform (3) zwischen den genannten Halbteilen (5) der Form (1);
Schließen der Form (1) durch die Annäherung der genannten Halbteile (5);
Verriegeln der geschlossenen Form (1) durch mindestens eine Verriegelungsschelle (11), die operativ an einer entsprechenden Basis (9) der Form (1) aktiv ist;
Bearbeiten der Vorform (3), um den Behälter (2) zu formen;
Entfernen der Verriegelungsschelle (11) von der entsprechenden Basis (9) der Form (1);
Öffnen der Form (1), indem die genannten Halbteile (5) voneinander entfernt werden;
Herausnehmen des geformten Behälters (2) aus der Form (1),
**dadurch gekennzeichnet, dass** der Schritt zum Verriegeln der geschlossenen Form (1) dadurch erfolgt, dass die genannte mindestens eine Schelle (11) an die entsprechende Basis (9) so angenähert wird, dass eine elastisch verformbare Hülse (25), die die Schelle (11) in der Innenseite trägt, zwischen die Schelle (11) und
die Basis (9) eingesetzt wird, wobei die genannte Hülse (25) einem Druck der Schelle (11) gegen die Basis (9) ausgesetzt ist, elastisch verformt wird und so den mechanischen Rückstoß zwischen den genannten Halbteilen (5) aufnimmt.

## Revendications

1. Moule (1) pour mouler au moins un récipient (2) réalisé à partir d'une ébauche (3), comprenant:
deux demi-portions (5) relativement mobile l'une par rapport à l'autre, au moins entre une position de fermeture du moule (1), dans laquelle lesdites demi-portions (5) se rapprochent afin de former au moins une cavité (6) pour loger l'ébauche (3) ou le récipient moulé (2), et une position d'ouverture du moule (1),
dans laquelle lesdites demi-portions (5) s'éloignent pour permettre le détachement du récipient moulé (2);
au moins un collier de verrouillage (11) opérationnellement actif sur une base correspondante (9) du moule (1) pour le verrouiller dans la position de fermeture,
**caractérisé en ce que** ledit au moins un collier (11) supporte à l'intérieur un manchon élastiquement déformable (25) qui, dans une configuration de prise du collier (11) avec la base correspondante (9),
s'interpose entre ledit collier (11) et ladite base (9), où ledit manchon (25) est exposé à une poussée du collier (11) contre la base (9) et est élastiquement déformé de sorte à récupérer du jeu mécanique entre le collier (11) et la base correspondante (9), et par conséquent, entre lesdites demi-portions (5).

2. Moule (1) selon la revendication 1, dans lequel ladite base (9), avec le moule (1) dans la position de fermeture, forme un élément mâle (26) qui, dans ladite configuration de prise du collier (11) avec la base (9), s'introduit dans le manchon (25), déterminant un accouplement cylindrique ou prismatique entre un profil latéral (27) de l'élément mâle (26) et une face interne (28) dudit manchon (25).

3. Moule (1) selon la revendication 1, comprenant aussi sur ladite base (9), deux portions demi-cylindriques (23) qui, avec le moule (1) dans la position de fermeture, forment un élément mâle (26) qui, dans ladite configuration de prise du collier (11) avec la base (9), s'introduit dans le manchon (25), déterminant un accouplement cylindrique ou prismatique entre un profil latéral (27) de l'élément mâle (26) et une face interne (28) dudit manchon (25).

4. Moule (1) selon les revendications 2 ou 3, dans lequel une portion extrême (28a) de ladite face interne (28) du manchon (25) est partiellement inclinée par rapport audit profil latéral (27) de l'élément mâle (26), de sorte à faciliter l'introduction de l'élément mâle (26) dans le manchon (25).

5. Moule (1) selon l'une quelconque des revendications précédentes, dans lequel ledit manchon (25) présente une face externe tronconique ou troncopyramidale (29) de forme complémentaire à celle d'une face interne correspondante tronconique ou troncopyramidale (30) du collier respectif (11).

6. Moule (1) selon l'une quelconque des revendications précédentes, comprenant deux colliers de verrouillage (11a, 11b) opérationnellement actifs sur des bases opposées correspondantes (9a, 9b) du moule (1) pour le verrouiller dans la position de fermeture.

7. Moule (1) selon la revendication 6, comprenant un organe d'actionnement simple (12) pour rapprocher ou pour éloigner lesdits colliers de verrouillage (11a, 11b) des bases correspondantes (9a, 9b).

8. Moule (1) selon la revendication 6, comprenant deux organes d'actionnement distincts, capables chacun de rapprocher ou d'éloigner lesdits colliers de verrouillage (11a, 11b) des bases correspondantes (9a, 9b).

9. Moule (1) selon l'une des revendications 1 à 8, comprenant une plaque inférieure (8) située sur ladite base (9) du moule (1), ladite plaque inférieure (8) coopérant avec les demi-portions (5) pour former le fond du récipient (2).

10. Moule (1) selon la revendication 9, comprenant un organe élastique (15) pour accrocher la plaque inférieure (8) audit au moins un collier de verrouillage (11).

11. Moule (1) selon la revendication 9, comprenant un organe d'actionnement pour faire bouger la plaque inférieure (8), indépendamment du mouvement dudit au moins un collier de verrouillage (11), ladite plaque inférieure (8) bougeant d'une configuration de prise à une configuration de hors prise par rapport auxdites demi-portions (5).

12. Moule (1) selon l'une quelconque des revendications précédentes, dans lequel ledit au moins un collier (11) présente des picots radiaux (31) pouvant s'introduire dans des rainures (32) formées sur ledit manchon (25), de sorte à rendre solidaire le manchon (25) dudit collier (11).

13. Moule (1) selon les revendications 1 à 12, dans lequel ledit manchon (25) présente une saillie (33) pouvant s'introduire dans un renfoncement (34) formé sur le collier (11), de sorte à rendre solidaire le manchon (25) dudit collier (11).

14. Moule (1) selon l'une quelconque des revendications précédentes, comprenant aussi des moyens de réinitialisation (36) opérationnellement actifs sur le manchon (25), de sorte que, dans une configuration de hors prise du collier (11) par rapport à la base correspondante (9), lesdits moyens de réinitialisation (36) ramènent le manchon (25) dans un état initial en l'absence de déformation.

15. Procédé pour mouler un récipient (2) à partir d'une ébauche (3), comprenant les étapes suivantes:
introduire l'ébauche (3) entre deux demi-portions (5) d'un moule ouvert (1);
garder l'ébauche (3) entre lesdites demi-portions (5) du moule (1);
fermer le moule (1) en rapprochant lesdites demi-portions (5);
verrouiller le moule (1) fermé à l'aide d'au moins un collier de verrouillage (11) opérationnellement actif sur une base correspondante (9) du moule (1);
usiner l'ébauche (3) pour former le récipient (2);
retirer le collier de verrouillage (11) de la base correspondante (9) du moule (1);
ouvrir le moule (1) en éloignant lesdites demi-portions (5);
extraire le récipient moulé (2) du moule (1),
**caractérisé en ce que** l'étape de verrouiller le moule (1) fermé se fait en rapprochant ledit au moins un collier (11) de la base correspondante (9), de sorte qu'un manchon élastiquement déformable (25), supporté à l'intérieur par le collier (11), s'interpose entre le collier (11) et la base (9), où ledit manchon (25) est exposé à une poussée du collier (11) contre la base (9) et est élastiquement déformé, récupérant du jeu mécanique entre lesdites demi-portions (5).
